# EUROPEAN PATENT APPLICATION

(11) **EP 4 148 295 A1**
(43) Date of publication of application: **15.03.2023**
(21) Application number: 21196326.9
(22) Date of filing: 13.09.2021
(51) Int. Cl.: F16F 7/08, F16F 1/02

(54) **A DEFORMABLE STRUCTURE**

(71) Applicant: Fraunhofer-Gesellschaft zur Förderung der angewandten Forschung e.V., 80686 München (DE)
(72) Inventor: PATIL, Sankalp, 79104 Freiburg (DE); GANZENMÜLLER, Georg, 79104 Freiburg (DE)
(74) Representative: 2SPL Patentanwälte PartG mbB

(57) **Abstract**

A deformable structure (100) comprises a first element (102) and a second element (104) movable with respect to each other in a direction of deformation (106). A control element (112) exerts force between the first element (102) and the second element (104) to increase friction between the first element (102) and the second element (104) upon deformation of the deformable structure (100) in the direction of deformation (106).

## Description

### Field

Examples relate to deformable structures and their design.

### Background

In the field of crashworthiness, for example, large amounts of kinetic energy need to be dissipated on short time- scales to fulfill multiple safety criteria. To effectively achieve this task, strain-rate dependent materials may be required. Strain-rate dependent materials behave differently at different speeds of deformations. Conventional manufacturing processes may introduce strain rate dependency using complex systems composed of several materials. In the case of additive manufacturing, however, only a single material or metal can be processed. Hence, a new approach for controlling strain-rate dependency or dissipative properties would be beneficial to enable modern production technologies such as, for example, additive manufacturing.

### Summary

An embodiment relates to a deformable structure, comprising a first element and a second element movable with respect to each other in a direction of deformation. A control element exerts force between the first element and the second element to increase friction between the first element and the second element upon deformation of the deformable structure in the direction of deformation. Making the control element exert the force upon deformation of the deformable structure enables to fully control the amount of force depending on the amount of deformation and/or the speed of deformation solely by choosing an appropriate geometry of the structure, irrespective of the structure being built from multiple elements or being a single monolithic structure. Controlling the amount of force does, in turn, allow to control the amount of energy dissipated by friction between the first element and the second element and hence the energy dissipated within the deformable structure depending on the amount and/or speed of deformation.

A further embodiment comprises a first surface and a second surface opposing the first surface and movable with respect to the first surface in a direction of deformation. The embodiment further comprises a first element connected to the first surface and a second element connected to the second surface. A control element is connected to the first surface and the second surface such as to exert force on the first element or on the second element to increase a friction between the first element and the second element upon movement of the first surface towards the second surface in the direction of deformation. Making the control element exert the force upon deformation of the deformable structure enables to fully control the amount of force depending on the amount of deformation and/or the speed of deformation solely by choosing an appropriate geometry of the structure. Connecting the first element and the second element directly to the surfaces receiving the load may enable a geometry suitable for additive manufacturing.

### Brief description of the Figures

Some examples of apparatuses and/or methods will be described in the following by way of example only, and with reference to the accompanying figures, in which
- Fig. 1: illustrates a 2D cross section of an embodiment of a deformable structure;
- Fig. 2: illustrates a 3D illustration of a further embodiment of a deformable structure; and
- Fig.3: illustrates a 2D cross section of a further embodiment of a deformable structure.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

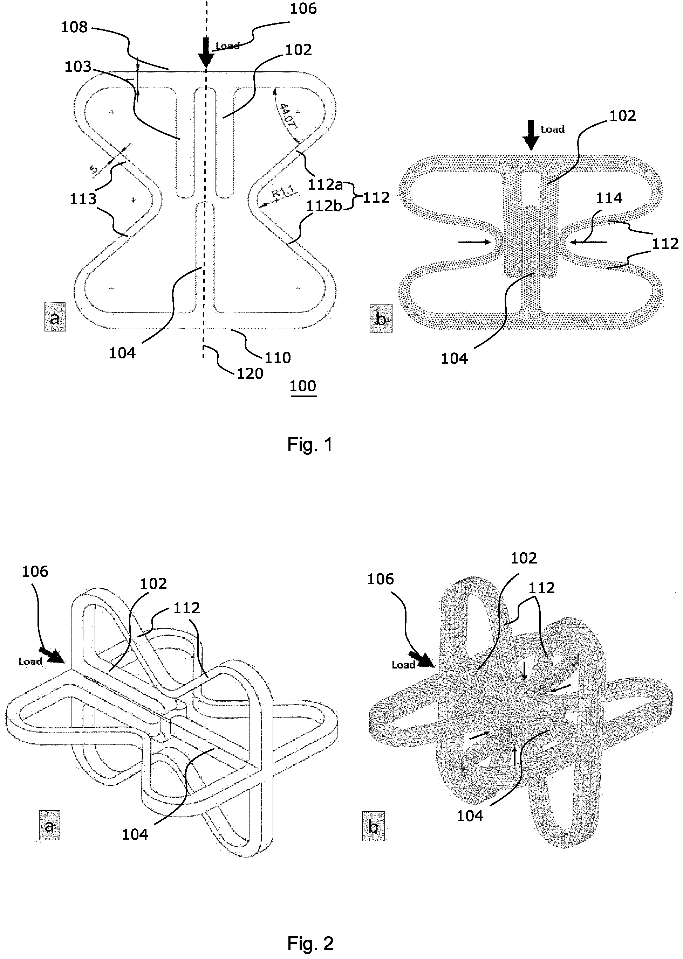

Fig. 1 illustrates a cross section through an embodiment of a deformable structure 100.

The deformable structure 100 comprises a first element 102 and a second element 104. The first element 102 and the second element 104 are movable with respect to each other in a direction of deformation 106. The direction of deformation 106 is the direction in which the design is intended to take a load causing the deformation. In the embodiment of fig. 1, the load is taken by a first surface 108 of the deformable structure, while a second surface 110 opposing the first surface 108 is intended to be supported by a counter structure which is to be protected from deformation or damage by dissipating the energy caused by the load within the deformable structure 100. A control element 102 exerts a force 114 between the first element 102 and the second element 104 to increase friction between the first element 102 and the second element 104 upon deformation of the deformable structure 100 in the direction of deformation 106.

The embodiment illustrated in fig. 1 is designed such that only geometric parameters control the amount of force 114 pushing the first element 102 onto the second element 104, so controlling friction between the first element 102 and the second element 104. In particular, the angle (in the unloaded condition) between the first surface 108 and the control element 112, and the angle/radius R1,1 between a first portion 112a of the control element 112 extending into the direction of the second element 204 and a second portion 112b of the control element 112 extending away from the second element 104 along the direction of deformation 106 define, how much force is generated. Since the force pushes the first element 102 against the second element 104, controlling the force between both elements controls the amount of energy absorbable by means of dissipation. Similarly, the material strength of the control element 112 and of the material forming the radius between the first surface 108 and control element 112 define (for a given material), how much force is generated depending on the amount of deformation. In the embodiments illustrated herein, the control element 112 exerts force in a direction perpendicular to the direction of deformation 106. In further embodiments, however, the control element 112 could also generate force in a different direction, as long as the generated force controls friction between two elements designed to dissipate energy.

Defining the energy dissipation capabilities by means of geometric parameters only, instead of requiring separate materials, enables to build deformable structures with the required characteristics also by modern and cost-effective production technologies, such as for example by additive manufacturing or injection molding. This enables the construction of monolithic deformable structures being a single piece of identical material. Further embodiments, however, may likewise be composed of several individual components assembled into a deformable structure. For example, a control element like the one illustrated in fig. 1 could be connected to the first surface 108 by means of a hinge. Therefore, the term element as used herein should be understood as a portion of a structure effecting a certain function rather than as an individually prefabricated element. In an embodiment composed of a monolithic structure, for example generated by additive manufacturing, and element is therefore describing a part of the structure or the material designed to perform a specific function.

Fig. 1 illustrates an embodiment that is symmetric about an axis 120 parallel to the direction of deformation 106 to avoid generating additional momenta when the structure is deformed. Therefore, there exists a third element 103 being fixed with respect to the first element, 102 and a further control element 113 opposite the control element 112. The second element 104 is placed between the first element 102 and the third element 103 such that exertion of force by the control element 112 and the further control element 113 increases friction between the first element 102 and the second element 104 and between the second element 104 and the third element 103. Further embodiments, however, may also be asymmetric, if additional momenta generated during the deformation are acceptable or even desirable.

Further to enabling full control of the energy dissipation properties of the deformable structure, the embodiments described herein deform in a reversible manner so that deformable structures return in the original position if there is no longer a load on the structure. Hence, energy can be dissipated without destroying the functionality for future uses. In other words, at least the control element deforms elastically upon movement of the first surface towards the second surface such that a contact area between the first portion and the second portion exerts force pressure on the first element or on the second element.

In some embodiments, the deformable structure is made of a metallic material. Using metal for additive construction methods, for example, allows to design structures capable to dissipate a high amount of energy.

According to some further embodiments, the surfaces of the first element 102 and the second element 104 being in friction contact with one another are rough. Deliberately generating the surfaces rough means generating a surface roughness higher than the one achieved by conventional technologies, such as for example by additive manufacturing. Rough may, to this extent, be interpreted to be at least twice the surface roughness achieved by conventional production mechanisms, or higher.

While the control element of the embodiments described herein is connected to both the first surface and the second surface such as to exert force on the first element or on the second element, further embodiments may likewise show control elements connected to only of those surfaces to generate the required force.

In summary, Fig. 1 shows an auxetic design with an added friction mechanism. Auxetic designs change their sizes in one dimension when deformed in another dimension perpendicular thereto. It is designed with the fundamental idea of redirecting the vertical compressive load into the horizontal direction to create a force in the horizontal direction, such that the central stems are pressed against each other, creating contact pressure. Axial compression thus effects a friction force. The magnitude of the friction force can be controlled by the geometry of the curved beams. Their thickness and bending radii are the dominant parameters to achieve this task. One additionally beneficial feature of the illustrated design is that the contact pressure is distributed over a large area to decrease stress concentrations and exploit the proportional regime of coulomb friction, i.e. a constant ratio of normal force and friction force. A second feature is that the forces acting in the vertical direction, i.e., those which resist compression, are directly correlated with the friction force. A third feature is that one can generate large frictional forces without exceeding the material strength. This is because the friction force is effected by the curved beams which span the entire height of the unit cell. Thus, their length is maximized, which is advantageous as bending stresses are inversely proportional to the third power of the bending length.

Strain rate dependency is addressed by changing the surface roughness of the stems which slide against each other. Surface roughness controls the dynamic coefficient of friction. Thus, a change of AM process parameters leads to different strain rate behavior. According to some embodiments, the surface roughness is controlled to be within [5µm, 100µm]. According to further embodiments, the surface roughness may be controlled to be within one of the intervals [20µm, 90µm], [30µm, 80µm], [40µm, 70µm], [50µm, 60µm], [50µm, 100µm], [60µm, 100µm], [70µm, 100µm], [80µm, 100µm], and [90µm, 100µm].

Fig. 1 illustrates a cross-sectional view of the deformable structure 100 that may, for example, extend perpendicular to the plane of illustration to become symmetric about plane illustrated by means of axis 120. Further embodiments, however, may be rotational symmetric about an axis. Fig. 2 illustrates such an embodiment, based on the principle illustrated in figure 1. Since the functions and elements are identical to the ones already described with respect to fig. 1, the same reference numerals are used.

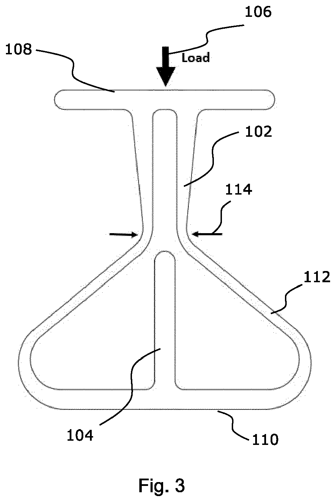

Fig. 2 illustrates a further embodiment of a deformable structure that could be used as a unit cell for more complex structures composed of multiple unit cells. The extension of the 2D principle of Fig. 1 to the 3D structure illustrated in Fig. 2 is achieved by rotating the 2D cross section an appropriate number of times around the axial axis of symmetry. Fig. 3 shows a version with a four-fold rotation axis, but high orders of rotation symmetry are also possible and should be covered in this patent. The extreme would be a continous revolution of the 2D profile by 180° around its axis of symmetry, creating a spun profile with cylindrical symmetry.

The 3D cell illustrated in Fig. 2 shares the same benefits already mentioned for the embodiment of Fig. 1. The design avoids localization of stresses. Thus, one can maximize the energy dissipation for given size or weight of the additively manufactured structure. The embodiments enable both strain rate dependency and a reversible energy dissipative mechanism as design degrees-of-freedom into the AM process. Dissipation and strain rate dependency are controllable using geometric choices of the unit cells. In this way, the intrinsic time-dependent dissipation properties of the base material are overcome. Unit cell facilitates dissipation, but can restore back to its initial shape, if the loading is not too severe. In this way, dissipative functionality, which can be exploited multiple times, is given to AM structures.

Fig. 3 illustrates a further embodiment of a deformable structure based on the principles elaborated on in the preceding paragraphs. Here, the compressive forces acting in the direction of deformation 106 are redirected into a horizontal displacement of the first element 102, leading to a contact force between the first element 102 and the second element 104 which exerts friction. The control element 112 redirecting the force is directly attached to the first element 102 in this implementation. However, like the embodiments illustrated in Figs. 1 and 2, the angle between control element and the second surface together with the remaining design of the deformable structure causes the exertion of force between the first element and the second element 104 like in those embodiments.

While in the embodiments of Figs. 1 to 3, a vertical load is redirected, effecting lateral contraction, and the laterally contracting force is used to effect friction, further embodiments might use structures or unit cells which expand laterally, instead of contracting, and create friction by pressing laterally against adjacent unit cells.

All previously cited embodiments facilitate an additive manufacturing (AM) process, wherein both energy dissipation and strain rate behavior can be programmed into the additively manufactured (3D-printed) structure. In this way, the resulting behavior of the 3D-printed structure is not limited by the intrinsic properties of the AM base material.

Dissipation without permanent deformation and a strain rate dependent material response is achievable using an additive manufacturing process of, e.g., metallic structures. Both new technology features are controlled by geometry choices of the unit cell and are therefore independent of the material properties of the metal powder used in the AM process. The fundamental effect achieved by embodiments described herein is the combination of force redirection (by means of, e.g., an auxetic mechanism) and a dissipative structure that induces a dissipative, strain rate dependent behavior.

The described approach enables the design of a unit cell of a metallic metamaterial that embeds a strong tunable strength to weight ratio with reversible dissipative capability. It can be utilized in scenarios where the structure experiences severe deformation upon loading. In such a scenario, the structures are expected to be highly dissipative and absorb high amounts of impact energy. For optimal crashworthiness, the structures should be adjustable in terms of their stiffness at varying load intensities, which is achieved by the embodiments of the invention.

Hence, a potential industrial field of application may be automotive. E.G. a design can be used for absorbing high kinetic energies during a crash event. A further design may relate to bumpers. The design facilitates to combine the behavior directly into structure, i.e., our design can be tiled and arranged as a lattice structure which can serve as a load carrying structure and also function as an impact absorbing structure during a crash event. Our design can be tuned to have a negative and positive strain rate dependency. A further design may relate to passive safety in an Electric Vehicle. A design can be employed as a mechanical passive safety mechanism during a thermal runaway of a battery in an electric vehicle.

A further potential industrial field of application may be Athletic Components like, for example, Shock absorbers for bicycles, especially for the bikes with bionic designs.

A further potential industrial field of application may be defense, creating impact and blast tolerant structures.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A deformable structure (100), comprising:
a first element (102) and a second element (104) movable with respect to each other in a direction of deformation (106); and
a control element (112) exerting force between the first element (102) and the second element (104) to increase friction between the first element (102) and the second element (104) upon deformation of the deformable structure (100) in the direction of deformation (106).

2. The deformable structure (100) of claim 1, wherein the control element (112) exerts force in a direction perpendicular to the direction of deformation (106).

3. The deformable structure (100) of claim 1 or 2, wherein the force exerted by the control element (112) depends on the amount of deformation of the deformable structure (100) in the direction of deformation (106).

4. The deformable structure (100) of any one of claims 1 to 3, wherein the deformable structure (100) is built by additive manufacturing.

5. The deformable structure (100) of any one of claims 1 to 4, wherein the deformable structure (100) is made of a metallic material.

6. The deformable structure (100) of any one of claims 1 to 5, further comprising a third element (103) being fixed with respect to the first element (102), the second element (104) being placed between the first element (102) and the third element (103) such that exertion of force by the control element (112) increases friction between the first element (102) and the second element (104) and between the second element (104) and the third element (103).

7. The deformable structure (100) of any one of claims 1 to 6, wherein the deformable structure (100) is monolithic.

8. The deformable structure (100) of any one of claims 1 to 7, wherein surfaces of the first element (102) and second element (104) being in friction contact with one another are rough.

9. A deformable structure (100), comprising:
a first surface (108);
a second surface (110) opposing the first surface (108) and movable with respect to the first surface in a direction of deformation (106);
a first element (102) connected to the first surface (108);
a second element (104) connected to the second surface (110); and
a control element (112) connected to the first surface (108) and the second surface (110) such as to exert force on the first element (102) or on the second element (104) to increase a friction between the first element (102) and the second element (104) upon movement of the first surface (108) towards the second surface (110) in the direction of deformation (106).

10. The deformable structure (100) of claim 9, further comprising a third element (103) connected to the first surface and opposing the first element (102) with respect to the second element (104).

11. The deformable structure (100) of claim 9 or 10, wherein the deformable structure (100) is monolithic.

12. The deformable structure (100) of any one of claims 9 to 11, wherein the deformable structure (100) is composed of metallic material.

13. The deformable structure (100) of any one of claims 9 to 12, wherein the control element (112) exerts force in a direction perpendicular to the direction of deformation (106),

14. The deformable structure (100) of any one of claims 9 to 13, wherein the control element (112) comprises a first portion (112a) extending into the direction of the second element (104) and a second portion (112b) extending away from the second element (104) along the direction of deformation (106).

15. The deformable structure (100) of claim 14, wherein the control element (112) elastically deforms upon movement of the first surface (108) towards the second surface (110) such that a contact area between the first portion (112a) and the second portion (112b) exerts force pressure on the first element (102) or on the second element (104).

16. The deformable structure (100) of any one of claims 9 to 15, wherein the structure is symmetric about an axis (120) parallel to the direction of deformation (106).
